# EUROPEAN PATENT SPECIFICATION

(11) **EP 0 320 049 B1**
(45) Date of publication and mention of the grant of the patent: **01.06.1994**
(21) Application number: 88202748.5
(22) Date of filing: 30.11.1988
(51) Int. Cl.: C08G 67/02, C09J 173/00, C08J 5/12

(54) **Improved structural adhesives**
Montageklebstoff
Colbe d'assemblage

(30) Priority: 04.12.1987 US 128952; 04.12.1987 US 128972; 04.12.1987 GB 8728396
(43) Date of publication of application: 14.06.1989
(73) Proprietor: SHELL INTERNATIONALE RESEARCH MAATSCHAPPIJ B.V., 2596 HR Den Haag (NL)
(72) Inventor: Kinneberg, Peter Andrew, Houston Texas 77084 (US); Armer, Thomas Alex, Westboro Massachusetts 01581 (US); Van Breen, Adriaan Wouter, NL-1031 CM Amsterdam (NL); Barton, Roger Edgar Charles, NL-1031 CM Amsterdam (NL); Klei, Ebel, NL-1031 CM Amsterdam (NL)

(56) References cited:
- EP-A- 0 213 671
- FR-A- 1 457 575
- US-A- 3 530 109

## Description

The present invention relates to an improved structural adhesive, in particular an adhesive made from a polymeric material having thermosetting properties, at least in part. It also relates to a process for at least partially converting a thermoplastic material into such a thermosetting material, and to laminates bonded together with such an adhesive.

The general class of polymers of carbon monoxide and one or more ethylenically unsaturated compounds has been known for some years.

More recently, the class of linear alternating polymers of carbon monoxide and unsaturated compounds, now known as polyketones, has become of greater interest, in part because of improved methods of production. Such methods are shown by European Patent Applications 181,014 and 121,965. The disclosed processes employ, inter alia, a compound of a Group VIII metal such as palladium, an anion of a non-hydrohalogenic acid having a pKa below 2 and a bidentate ligand of phosphorus. The resulting polymers are generally high molecular weight thermoplastic polymers having utility in the production of articles such as containers for food and drink and parts for the automotive industry or structural members for use in the construction industry.

Since the relevant polymers are thermoplastic they can be transformed into the desired articles of manufacture by processing in the thermoplastified or molten condition, e.g. by techniques such as injection-moulding, compression-moulding, extrusion, melt-spinning, coextrusion to form laminates, and the like. For some applications, however, thermoplastic materials do not present the necessary mechanical rigidity, evidenced e.g. by creep behaviour.

It is generally known to improve certain physical and/or mechanical properties of many thermoplastic polymers, such as polyethylene, polypropylene, polystyrene, polyamides, polyaramides, polysulphones, polycarbonates or polyphenylene ethers, by subjecting finished articles of manufacture to a short heat-treatment at temperatures around the crystalline melting point of the thermoplastic polymers, such heat-treatment being referred to herein as "annealing".

In commercial practice annealing is mainly employed to achieve improved stress/strain relaxation in the finished article of manufacture.

It is known from US-A-3530109 that when subjecting alternating olefinic compound/carbon monoxide polymers which are presently not available on the market, to a certain heat-treatment as defined hereinabove, this results in a modification of the polymers which is completely different from that envisaged in annealing any of the other thermoplastic polymers listed hereinabove. The afore-said modification is very much of a chemical nature and related to the development of thermosetting properties. The reason why thermosetting properties are created is associated with the development of a certain degree of cross-linking occurring by reaction of different molecular polymer chains, thus creating a three-dimensional network of interconnected polymer chains.

Adhesives based on polyketone polymers are disclosed for example, in U.S. Patent No. 3,808,288. This patent discloses a tape-backing comprising a mixture of an epihalohydrin polymer and a polyketone. However, the word "polyketone" is used there to denote a completely different class of polymers, namely the polycondensation products of ketones such as acetone or acetophenone, which are more properly called polyacetals or polyethers. Moreover, this particular adhesive is stiff, it lacks certain desirable qualities for structural adhesives, such as abrasive resistance. This particular adhesive, as well as other types of solvent resistant adhesives are prone to thermal degradation and plasticizer extraction by various oils, hydrocarbons and fuels. Improved structural adhesives have been needed in the car manufacture industry.

It has now been found that stiff structural adhesives having excellent solvent resistance and physical properties such as resistance to thermal degradation and plasticizer extraction can be prepared from polyketones which have been subjected to a heat-treatment in which melting of the polymer is avoided, in order to maintain its crystallity as much as possible. The heat-treatment is effected at a temperature below the crystalline melting point, so that cross-linking will occur without significantly destroying the crystallinity of the material. This appears to make the thermoplastic material at least partially thermosetting.

Accordingly, the invention relates to a process for bonding together pieces of solid material by applying an amount of molten or heat-plastified linear alternating copolymer of carbon monoxide and an ethylenically unsaturated compound between them and pressing them together, and subsequently heat-treating the copolymer at a temperature of (T-75) to (T-5)°C, T being the crystalline melting temperature of the copolymer for a period sufficient to increase the gel content of the copolymer to a value between 15 and 98 %wt, without modifying the crystallinity of the copolymer by more than 10% of the Hf value determined by DSC analysis.

This heat-treatment is carried out, or finished, after pressing together the pieces of solid material that are to be bonded. This amounts to in-situ curing, and provides high-strength adhesive bonds. Thus the invention is embodied with advantage in a process for bonding which includes as a first step the process for bonding described above, and where in a second step the bonded materials are subjected to a heat-treatment as defined above, carried out at (T-75) to (T-5).

The prime yard-stick to be handled in the process of this invention for monitoring the development and further increase of thermosetting characteristics is the growth of the gel-content of the alternating olefinic compound carbon monoxide polymer. This gel-content is determined by the weight percentage polymer that is insoluble in m-cresol at 100 °C. The second yard-stick to be observed is that the heat-treatment should effect no modification of the crystallinity of the alternating copolymer by more than 10% of the original value (before heat-treating) of the crystallinity of the alternating copolymer, expressed as the Hf value, measured in units of kJ.kg⁻¹ and determined by DSC analysis.

The beneficial effects of this invention are already obtained when increasing the gel-content to a value of at least 15% and this limiting value is set to define the minimum requirement in the heat-treatment of this invention.

Heating periods and heating temperatures to be observed in the process of this invention are interdependent in the sense that shorter periods can be employed at higher temperatures. The minimum heat treating temperature is 75 °C below the crystalline melting point of the copolymer. The maximum heat treating temperature is 5 °C below the crystalline melting point. Increase of gel content to values above 98 %w is to be avoided because of the development of too much thermosetting character in the polymer. The crystallinity of the alternating polymer remains substantially unmodified. In this sense the preferred heat-treatment of this invention is essentially different from a post-heating of articles of manufacture which is effected at the very melting point of thermoplastics or at even higher temperatures. Such a heat-treatment would not only effect cross-linking in the amorphous phase of the copolymer, but also in the crystalline phase.

Preferably the gel content is increased to at least 30 %w and to at most 85 %w, and the invention also relates to an adhesive material which is obtainable by such a process.

Beneficial physical, mechanical and chemical properties that are improved together with the increase in gel content are glass-transition temperature (T_{g}), creep, and solvent resistance. Again, this heat-treatment below T, in creating thermosetting character, opens the way towards useful hot-melt adhesives, particularly structural hot-melt adhesives.

Preferred polyketone polymers are copolymers of carbon monxide and an olefin, e.g. ethylene or terpolymers of carbon monoxide, ethylene and a second aliphatic olefin of 3 or more carbon atoms, particularly propylene.

Of particular interest are those polymers of molecular weight from about 1,000 to about 200,000, particularly those of molecular weight from 10,000 to 50,000, and containing substantially equimolar quantities of carbon monoxide and ethylenically unsaturated compound.

Molecular weights for these polymers are determined by conventional NMR testing methods.

Useful polyketones have limiting viscosity numbers (LVN) as measured by the method wherein the polymer is dissolved in metacresol at 60 °C, using a standard capillary viscosity measuring device (such as a Cannon-Ubbelohde viscometer) in the range of 0.5 to 10 LVN and more preferably 0.8 to 4 LVN and most preferably 0.8 to 2.5 LVN. Polyketone polymers usable for adhesive preparation have preferred melting points of 196-225 °C though polymers with melting points ranging from about 180 to about 280 °C may be usable, whereas the polymers usable for the preparation of thermosetting materials preferably have melting points in the range of 230-280 °C.

Within the scope of the present invention, polyketone polymers having tensile break of about 65 MPa, elongation at break of about 25%, a Youngs modulus of about 2200 MPa, and a 1% SEC modulus of about 1550 MPa, are preferred.

In the process whereby the present material is obtainable (is is not excluded that the same or substantially the same structural material may be obtained otherwise) the heat-treatment should be effected at such a temperature/time combination that cross-linking occurs in the amorphous phase, whereas it may occur also in the crystalline phase (though this is not preferred).

The principle of this invention opens the way for making parts or structural elements for the aerospace industries, e.g. helicopter blades may be made from aluminium sheeting that is strengthened by adhering a titanium layer onto it, when using as adhesive a polymer having an increased gel content obtainable in accordance with this invention. This application includes first applying the copolymer as a hot-melt adhesive and then subjecting the polymer to the heat treatment of this invention. Similarly, car body panels, e.g. doors, can be made by joining an inner structural element to an outer element, using a heat-treated polymer of this invention as adhesive. The hot melt application of the polymer for that application does not strictly have to be in the form of a continuous layer. Small amounts of polymer may be melt-deposited on various positions of the structural elements (spot-adhering), the elements are then pressed together and the assembly is heated, e.g. by passing through an infrared oven to implement the heat-treatment of this invention.

Other suitable applications of the novel products of this invention are in the fields of fibre reinforced composites, film or sheet materials, injection mouldings, blow-moulded containers, e.g. for organic solvents, reinforcing fibres, extruded piping, profiles and the like.

In particular the invention thus also concerns an article of manufacture, in particular a laminate, made of two or more (pieces of) structural material(s) bonded together with an adhesive, characterized in that an adhesive according to the invention is used. The article of manufacture, i.e. in particular the laminate, is preferably obtainable by a process which comprises the steps of bonding together with a hot-melt adhesive prepared by heat-treating according to the invention at a temperature above T, and heat-treating the bonded article according to the invention at a temperature 5 to 75 °C below T. The bonded structural materials are very suitably selected from polymers and/or metals, especially cold rolled steel, resin coated steel, mild steel, titanium and aluminium.

Additional components may optionally be added to the polyketone formulation to enhance the properties or reduce the cost. Metal scavengers, like gamma alumina can be added to enhance thermal stability. It is also contemplated that additional hardeners, fillers, extenders, fortifiers, carriers, and perservatives of the type known to the art can be added to the novel engineering material.

The invention is now illustrated by the following example.

### EXAMPLE - Thermosetting test

An alternating copolymer of ethylene and carbon monoxide having an LVN of 1.10 dl.g⁻¹, a crystalline melting point of 253 °C and a gel content of 0.1 %w was heated at a temperature of 240 °C during 6, respectively 10 and 15 minutes. Gel content of the heated samples was determined by the method set out hereinbefore. Determination of the crystallinity of the copolymer (Hf value) before and after the heat-treatment showed a relative modification of less than 10%.

**TABLE**

| Heating, min | gel, %w |
|---|---|
| 0 | <0.1 |
| 6 | 12 |
| 10 | 60 |
| 15 | 90 |

## Claims

1. A process for bonding together pieces of solid material by applying an amount of molten or heat-plastified linear alternating copolymer of carbon monoxide and an ethylenically unsaturated compound between them and pressing them together, and subsequently heat-treating the copolymer at a temperature of (T-75) to (T-5)°C, T being the crystalline melting temperature of the copolymer for a period sufficient to increase the gel content of the copolymer to a value between 15 and 98 %wt, without modifying the crystallinity of the copolymer by more than 10% of the Hf value determined by DSC analysis.

2. A process as claimed in claim 1, in which the heat-treating is implemented sufficient to increase the gel content of the copolymer to a value between 30 and 85 %wt.

## Patentansprüche

1. Verfahren zum Verkleben von Teilen aus festem Material durch Aufbringen einer Menge aus geschmolzenem oder hitzeplastifiziertem, linearem, alternierendem Copolymer aus Kohlenmonoxid und einer ethylenisch ungesättigten Verbindung zwischen ihnen und Zusammenpressen der Teile, und anschließendes Wärmebehandeln des Copolymers bei einer Temperatur von (T-75) bis (T-5)°C, worin T den Kristallinschmelzpunkt des Copolymers bedeutet, während einer zur Erhöhung des Gelgehaltes des Copolymers auf einen Wert von 15 bis 98 Gew.-% ausreichenden Zeit, ohne die Kristallinität des Copolymers um mehr als 10 % des Hf-Wertes, bestimmt durch DSC-Analyse, zu ändern.

2. Verfahren nach Anspruch 1, worin die Wärmebehandlung so weit ausgeführt wird, daß der Gelgehalt des Copolymers auf einen Wert von 30 bis 85 -Gew.-% erhöht wird.

## Revendications

1. Procédé pour relier ensembles des pièces d'un matériau rigide consistant à appliquer entre elles une quantité de copolymère linéaire alternant de monoxyde de carbone et d'un composé éthyléniquement insaturé fondu ou plastifié à la chaleur et à les presser ensemble, et ultérieurement à traiter thermiquement le copolymère à une température de (T-75) à (T-5)°C, T étant la température de fusion cristalline du copolymère pendant une durée suffisante pour augmenter la teneur en gel du copolymère à une valeur comprise entre 15 et 98% en poids, sans modifier la cristallinité du copolymère de plus de fondu ou plastifié à la chaleur 10% de l'indice Hf par analyse calorimétrique différentielle à balayage (DSC).

2. Procédé selon la revendication 1, dans lequel on exécute le traitement thermique de façon suffisante pour augmenter la teneur en gel du copolymère à une valeur comprise entre 30 et 85% en poids.
